# EUROPÄISCHE PATENTSCHRIFT

(11) **EP 1 323 560 B1**
(45) Veröffentlichungstag und Bekanntmachung des Hinweises auf die Patenterteilung: **30.09.2009**
(21) Anmeldenummer: 02028376.8
(22) Anmeldetag: 18.12.2002
(51) Int. Cl.: B60J 5/04, E05B 65/12

(54) **Tür für ein Kraftfahrzeug mit einem Schloss**
Vehicle door with lock
Porte de vehicule avec verrouillage

(30) Priorität: 20.12.2001 DE 10162755
(43) Veröffentlichungstag der Anmeldung: 02.07.2003
(73) Patentinhaber: GM Global Technology Operations, Inc., Detroit, MI 48265-3000 (US)
(72) Erfinder: Schad, Werner, 65474 Bischofsheim (DE); De Vries, Marc, Dipl.-Ing., 65428 Rüsselsheim (DE)
(74) Vertreter: Strauss, Peter

(56) Entgegenhaltungen:
- EP-A- 0 331 832
- EP-A- 1 130 201
- DE-A- 4 217 140
- US-A- 4 936 621

## Beschreibung

Die Erfindung bezieht sich auf eine Tür für ein Kraftfahrzeug mit einem Schloss, dessen Schlossfalle mit einem Schließbolzen zusammenwirkt, der an einer einer Bodengruppe des Kraftfahrzeuges zugeordneten Säule befestigt ist, die einem ein Türinnenblech und ein Türaußenblech verbindenden Stegblech der Tür zugewandt ist.

Die DE 32 40 532 C2 offenbart eine Kraftfahrzeugtür mit einem Schloss, das mit einem fahrzeugfesten, gehäuseartigen Halter zusammenwirkt, der an einer Säule befestigt ist, wobei Maßnahmen getroffen sind, um bei einem Aufprall ein Verklemmen der Tür zu verhindern. Die der Tür zugewandte Fläche des Halters erstreckt sich weiter in den Innenraum des Kraftfahrzeuges hinein als das Türblech bzw. ein darauf angeordneter Türbelag.

Aus der Praxis ist eine Tür für ein Kraftfahrzeug bekannt, die ein mit einem Schließbolzen zusammenwirkendes Schloss umfasst, wobei das Schloss innerhalb des Türgerippes montiert ist und der Schließbolzen in Richtung der benachbarten Türfläche weisend an einer Säule des Kraftfahrzeuges derart befestigt ist, dass er zum Verriegeln der Tür mit einer Schlossfalle des Schlosses zusammenwirkt. Das Schloss ist mit der Türfläche verschraubt. Bei einem Aufprall des Kraftfahrzeuges kann es zu einer Verlagerung der Tür oder der Säule kommen, wodurch Verformungskräfte auf die Türfläche wirken, so dass diese deformiert wird. Aufgrund der Deformation der Türfläche kommt es zu einer Hinterschneidung des Schließbolzens mit der Tür bzw. dem Türgerippe, was ein Verklemmen der Tür bewirkt.

Die EP 1 130 201 A1 offenbart ein Schloss für eine Kraftfahrzeugtür, das eine aus zwei Laminatteilen bestehende Zurückhalteplatte umfasst, die aus Stahl gefertigt und an der Kraftfahrzeugtür befestigt ist. Die Zurückhalteplatte trägt eine Schlossfalle und eine Sperrklinke. Im Weiteren dienen Bereiche der Zurückhalteplatte als Gehäuse des Schlosses. Die Zurückhalteplatte wird mittels ihrer Gewindebohrungen an einem Stegblech der Kraftfahrzeugtür in dessen innerer Struktur und nicht zwischen dem Stegblech und einer Säule befestigt, wobei Schrauben in Durchgangsbohrungen des Stegbleches eingesetzt und in die Gewindebohrungen eingeschraubt werden.

Es ist Aufgabe der Erfindung, eine Tür der eingangs genannten Art zu schaffen, deren zugeordneter Schließbolzen bei einem frontalen bzw. heckseitigen Aufprall des Kraftfahrzeuges nicht mit der Tür bzw. dem Türgerippe verklemmt.

Erfindungsgemäß wird die Aufgabe dadurch gelöst, dass eine Distanzplatte zwischen der Säule und dem der Säule zugewandten Stegblech der Tür entweder auf dem Stegblech oder der Säule derart angeordnet ist, dass sie im verformten Zustand des Kraftfahrzeuges ein Verklemmen des Schließbolzens mit der Tür verhindert, wozu die im Wesentlichen C-förmige Distanzplatte eine die Schließbolzenführung der Schlossfalle umgreifende C-förmige Aussparung aufweist, deren Öffnung korrespondierend zur Freimachung in Richtung des Fahrzeuginnenraums gerichtet ist und die Dicke der Distanzplatte in Abhängigkeit von der Tiefe einer den Schließbolzen aufnehmenden Mulde der Schlossfalle und der Länge des Schließbolzens bemessen ist, wobei eine in Richtung der Säule weisende Beaufschlagungsfläche der Distanzplatte zur Säule beabstandet ist.

Aufgrund der Distanzplatte ist eine unkontrollierte Verformung des Stegblechs im Bereich des Schließbolzens und damit ein Verklemmen des Schließbolzens mit der Tür bzw. dem Türgerippe durch eine aufprallbedingte Verformung ausgeschlossen. Bei einem Frontalaufprall kommt es zu einer Verlagerung der Tür in Richtung der Säule des Kraftfahrzeuges, wobei die Distanzplatte eine relativ großflächig verteilte Einleitung der herrschenden Verformungskräfte in das Stegblech der Tür bewirkt und ein Hinterschneiden des Schließbolzens mit der Tür bzw. dem Türgerippe verhindert, da die Distanzplatte an der Säule zur Anlage kommt und das Stegblech im Bereich des Schließbolzens nach vorn verschiebt. Bei einem heckseitigen Aufprall wird die Säule in Richtung der Tür verschoben, wobei die Distanzplatte ebenfalls die wirkenden Verformungskräfte in das Stegblech der Tür einleitet und ein Hinterschneiden des Schließbolzens mit der Tür bzw. dem Türgerippe aufgrund der Verformung des Stegblechs und der damit einhergehenden Verlagerung des dahinter angeordneten Schlosses im Bereich des Schließbolzens verhindert. Gleichzeitig sichert die Distanzplatte einen bestimmten Abstand zwischen der Tür und der zugeordneten Säule, so dass sich die Tür auch nach einer aufprallbedingten Verlagerung öffnen lässt.

Die Distanzplatte ist derart zu der zugeordneten Säule, bei der es sich in Abhängigkeit von der Lage der Tür um eine so genannte B- oder C-Säule handelt, beabstandet, dass die Tür im Normalzustand des Kraftfahrzeuges, also im unverformten Zustand, ohne eine Reibung zwischen der Distanzplatte und der Säule zu öffnen ist und bei einer aufprallbedingten Verlagerung der Tür die Schlossfalle und der Schließbolzen einer derart geringen Verformung unterliegen, dass das Verklemmen des Schließbolzens mit dem Türgerippe ausgeschlossen ist. Selbstverständlich kann die Distanzplatte sowohl an der Säule als auch auf dem Stegblech befestigt sein. Die relativ großflächige Distanzplatte bewirkt eine Verformung des Stegblechs in einem unmittelbar zu der Schlossfalle benachbarten Bereich. Die Außenkontur der Distanzplatte ist im Wesentlichen von den vorliegenden Platzverhältnissen bestimmt und kann beispielsweise auch rechteckförmig gestaltet sein.

Zur Gewährleistung der Funktion des Schlosses ist die Dicke der Distanzplatte in Abhängigkeit von der Tiefe einer den Schließbolzen aufnehmenden Mulde der Schlossfalle und der Länge des Schließbolzens bemessen, wobei eine in Richtung der Säule weisende Beaufschlagungsfläche der Distanzplatte zur Säule beabstandet ist. Das Beabstandungsmaß zwischen der Beaufschlagungsfläche der Distanzplatte und der Säule ist derart gering bemessen, dass nur eine kleine verformungsbedingte Verdrehung des Schließbolzens möglich ist, bis die Distanzplatte an der Säule zur Anlage kommt. Damit ist zum einen ein Verklemmen des Schließbolzens mit dem Türgerippe ausgeschlossen und zum anderen ein Öffnen der Tür im unverformten Zustand sichergestellt, bei dem keine Reibung zwischen der Beaufschlagungsfläche der Distanzplatte und der Säule herrscht.

Vorzugsweise umgreift die Distanzplatte eine Schließbolzenführung der Schlossfalle unter Freilassung einer einem Fahrzeuginnenraum zugewandten zum Ver- und Entriegeln der Tür erforderlichen Freimachung für den Schließbolzen. Bevorzugt überdeckt die Distanzplatte das Stegblech im Bereich des Schlosses.

Um eine Verformung des Stegbleches parallel zu der ein stirnseitiges Ende des Schließbolzens halternden Säule zu bewirken, ist vorteilhafterweise eine an dem Stegblech anliegende Anlagefläche der Distanzplatte parallel zu einer in der Tür angeordneten Grundplatte der Schlossfalle ausgerichtet. Zweckmäßigerweise verläuft die Anlagefläche der Distanzplatte parallel zu der Beaufschlagungsfläche.

Um eine Verbindung zwischen der Distanzplatte und der Tür zu schaffen, ist die Distanzplatte mit dem Stegblech der Tür verklebt. Das Verkleben ist besonders während der Montage hilfreich, da beim Ansetzen der Distanzplatte auf dem Stegblech der Tür mittels einer Montagelehre eine schelle Verbindung geschaffen wird. Zum Verkleben kann die Distanzplatte zumindest partiell mit doppelseitigem Klebeband versehen werden. Diese Art der Befestigung der Distanzplatte ist auch auf der Säule möglich.

Zur Herstellung einer zusätzlichen dauerhaften Befestigung, die auch eine Übertragung relativ großer Kräfte ermöglicht, ist bevorzugt die Distanzplatte mittels Schlossbefestigungsschrauben mit dem Schloss verschraubt, wobei die Köpfe der Schlossbefestigungsschrauben in der Distanzplatte versenkt sind. Bei einer aufprallbedingten Verlagerung der Distanzplatte wird über die Schlossbefestigungsschrauben auch das Schloss verschoben, so dass ein relativ großer Freiraum zur Verformung des zwischen dem Schloss und der Distanzplatte verlaufenden Stegblechs zur Verfügung steht. Im Weiteren ist durch das Versenken der Köpfe der Schlossbefestigungsschrauben ein Verhaken derselben mit Karosserieteilen bei der Verformung ausgeschlossen.

Um eine relativ kostengünstige, den mechanischen Anforderungen genügende Distanzplatte bereitzustellen, ist zweckmäßigerweise die Distanzplatte aus einem schlagzähen und gleitfähigen Kunststoff gefertigt. Der schlagzähe Kunststoff hält einem relativ starken Aufschlag bei einem Aufprall stand und seine guten Gleiteigenschaften verringern einen Reibwiderstand beim Öffnen der Tür nach einer Verlagerung derselben.

Vorzugsweise ist die Distanzplatte im Bereich der Verschraubungen mit Metalleinlagen versehen. Die Metalleinlagen stellen die Befestigung des Schlosses sicher, da sie ein Kriechen des Kunststoffes und einen damit verbundenen Drehmomentenabfall der Schlossbefestigungsschrauben weitestgehend verhindern, wobei die Metalleinlagen als Unterlegscheiben ausgeführt sein können.

Da die Senkungen sowie die Köpfe der Schlossbefestigungsschrauben aus ästhetischen Gründen kaschiert werden sollen, ist auf der Beaufschlagungsfläche der Distanzplatte eine reflektierende Folie angeordnet. Die Folie erfüllt im Weiteren eine Sicherheitsfunktion, da die geöffnete Tür im Dunkeln bei einem Lichteinfall für weitere Verkehrsteilnehmer als ein Hindernis zu erkennen ist

Um einen durch Oberflächenunebenheiten bedingten Toleranzausgleich zu bewirken, weist bevorzugt die Anlagefläche der Distanzplatte eine umlaufende an dem Stegblech anliegende Lippe auf.

Zur Versteifung des Schießbolzens ist dem Schließbolzen ein an der Säule befestigter C-förmiger Schließbügel zugeordnet, dessen Öffnung in Richtung des Fahrzeuginnenraums weist und dessen Schenkel an ihrem freien Ende jeweils ein Ende des Schließbolzens haltern. Der Schließbügel verhindert darüber hinaus ein Verhaken von Kleidungsstücken eines Fahrzeuginsassen beim Aussteigen aus dem Kraftfahrzeug mit dem Schließbolzen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:

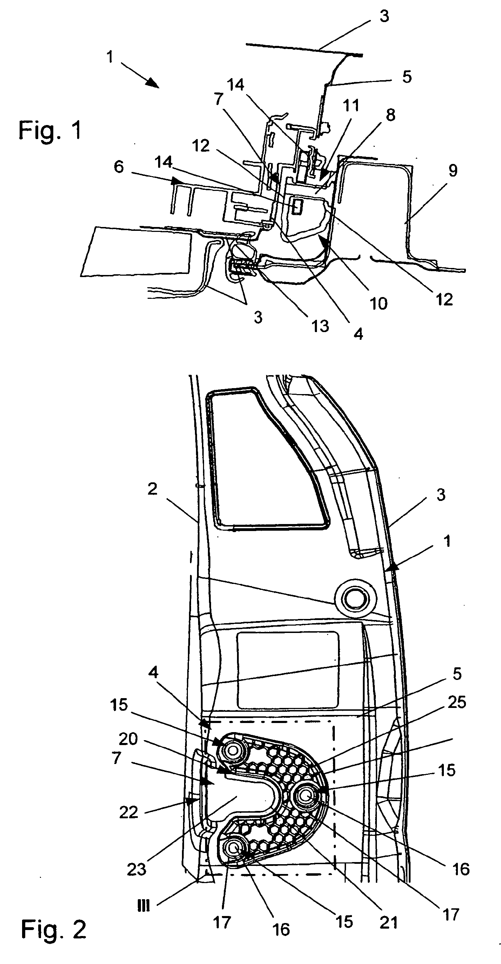

- Fig. 1: einen Teilschnitt durch eine erfindungsgemäße Tür mit angedeuteter Säule,
- Fig. 2: eine Ansicht auf die Stirnseite der Tür nach Fig. 1,

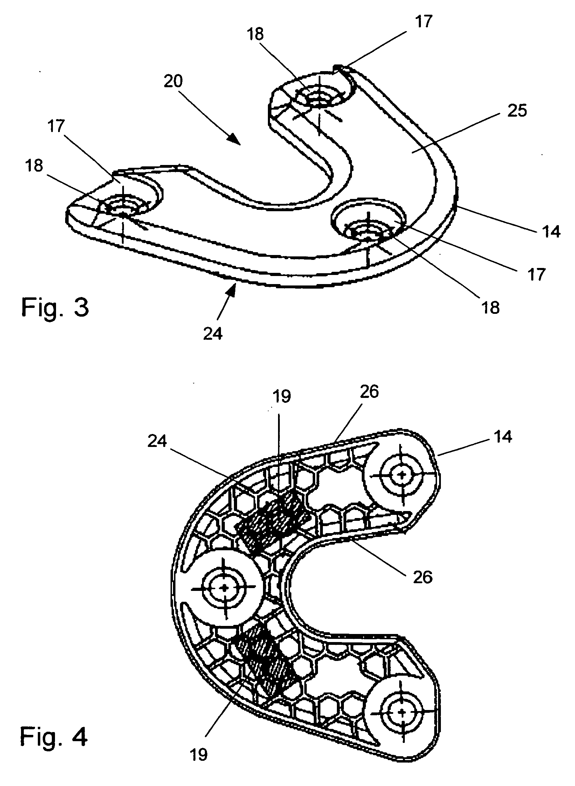

- Fig. 3: eine perspektivische Darstellung einer vergrößerten Einzelheit III gemäß Fig. 2 und
- Fig. 4: eine Unteransicht der Darstellung nach Fig. 3.

Eine Tür eines Kraftfahrzeuges besteht im Wesentlichen aus einem Türgerippe 1, das ein Türinnenblech 2 sowie ein Türaußenblech 3 aufweist, die an der freien Stirnseite der Tür durch ein Stegblech 4 miteinander verbunden sind, wobei das als Verstärkung dienende Stegblech 4 von einem Blechformteil 5 überspannt ist. In das Türgerippe 1 ist ein Einzelteile 6 umfassendes Schloss mit einer Schlossfalle 7 eingebaut, die bei geschlossener Tür mit einem Schließbolzen 8 zusammenwirkt, wobei der Schließbolzen 8 an einer Säule 9 des Kraftfahrzeuges befestigt ist, die entsprechend ihrer Zuordnung zu einer vorderen oder hinteren Tür als B- oder C-Säule ausgebildet ist. Zur Aussteifung des an der Säule 9 angeschraubten Schließbolzens 8 ist ein C-förmiger Schließbügel 10 an der Säule 9 angenietet, dessen Öffnung 11 in Richtung des Fahrzeuginnenraums weist und dessen annähern parallel zueinander verlaufenden Schenkel 12 an ihrem jeweiligen freien Ende jeweils ein Ende des Schließbolzens 8 haltern. Zur Abdichtung der Türöffnung ist eine teilweise dargestellte Türdichtung 13 vorgesehen.

Auf dem der Säule 9 zugewandten Stegblech 4 der Tür ist eine Distanzplatte 14 befestigt, die über Schlossbefestigungsschrauben 15 mit dem Schloss in Verbindung steht, wobei jeder Kopf 16 der Schlossbefestigungsschrauben 15 in eine Senkung 17 der Distanzplatte 9 eingesetzt ist und sich auf einer als Unterlegscheibe 18 ausgebildeten Metalleinlage abstützt, die in die Distanzplatte 14 eingespritzt sind. Zur Vereinfachung der Vormontage der Distanzplatte 14 mittels einer Lehre sind zwei Klebestreifen 19 auf einer Anlagefläche 24 der Distanzplatte 14 vorgesehen.

Die im Wesentlichen C-förmige Distanzplatte 14 weist eine C-förmige Aussparung 20 auf, die eine erhabene Schließbolzenführung 21 der Schlossfalle 7 unter Freilassung einer einem Fahrzeuginnenraum zugewandten zum Verund Entriegeln der Tür erforderlichen Freimachung 22 für den Schließbolzen 8 umgreift. Die Größe der Distanzplatte 14 ist derart bemessen, dass sie das Stegblech 4 im Bereich des Schlosses überdeckt. Dabei weist die mit der Anlagefläche 24 auf dem Stegblech 4 aufliegende Distanzplatte 14 eine Dicke auf, die im Wesentlichen von der Tiefe einer den Schließbolzen 8 aufnehmenden Mulde 23 der Schlossfalle 7 und der Länge des Schließbolzens 8 abhängig ist, wobei eine parallel zu der Anlagefläche 24 verlaufende Beaufschlagungsfläche 25 auf der Säule 9 zugewandten Seite der Distanzplatte 14 im geschlossenen Zustand der Tür geringfügig zur Säule 9 beabstandet ist. Zum Ausgleich toleranzbedingter Unebenheiten weist die Anlagefläche 24 der Distanzplatte 14 eine umlaufende an dem Stegblech 4 anliegende Lippe 26 auf.

Bei einem front- oder heckseitigen Aufprall des Kraftfahrzeuges kann die Tür in Richtung der Säule 9 bzw. die Säule 9 in Richtung der Tür verlagert werden. Hierbei wird der an der Säule 8 befestigte Schließbolzen 8 in Richtung des Schlosses verschoben und zwar zunächst bis die aus einem schlagzähen Kunststoff mit guten Gleiteigenschaften gefertigte Distanzplatte 14 an der Säule 9 zur Anlage kommt. Anschließend wird bei einer weitergehenden Verlagerung die Distanzplatte 14 mit dem Schloss nach vorn verschoben. Mit der Verschiebung der Distanzplatte 14 geht eine Deformation des von der Distanzplatte 14 überdeckten Stegbleches 4 einher. Bei der Verschiebung des Schlosses über die Distanzplatte 14 wird gemeinsam mit dem Schloss die Schlossfalle 7 beaufschlagt, deren Schließbolzenführung 21 bündig zu der Beaufschlagungsfläche 24 der Distanzplatte 14 angeordnet ist. Aufgrund der Anordnung der Distanzplatte 14 wirken lediglich geringe Drehmomente auf den Schließbolzen 8 sowie die Schlossfalle 7 und das die Schlossfalle 7 umgebende Stegblech 4 wird verformt, weshalb es nicht zum Verkanten des Schließbolzens 8 mit dem Türgerippe 1 kommt. Des Weiteren ist ein durch die Dicke der Distanzplatte 14 vorgegebener Abstand zwischen der Schlossfalle 7 und der Säule 9 gewährleistet und damit ein Verklemmen des Schließbolzens 8 im Schloss ausgeschlossen. Somit ist die Tür auch nach einem Aufprall zu öffnen.

## Patentansprüche

1. Tür für ein Kraftfahrzeug mit einem Schloss, dessen Schlossfalle (7) mit einem Schließbolzen (8) zusammenwirkt, der an einer einer Bodengruppe des Kraftfahrzeuges zugeordneten Säule (9) befestigt ist, die einem ein Türinnenblech (2) und ein Türaußenblech (3) verbindenden Stegblech (4) der Tür zugewandt ist, **dadurch gekennzeichnet, dass** eine Distanzplatte (14) zwischen der Säule (9) und dem der Säule (9) zugewandten Stegblech (4) der Tür entweder auf dem Stegblech (4) oder der Säule (9) derart angeordnet ist, dass sie im verformten Zustand des Kraftfahrzeuges ein Verklemmen des Schließbolzens (8) mit der Tür verhindert, wozu die im Wesentlichen C-förmige Distanzplatte (14) eine die Schließbolzenführung (21) der Schlossfalle (7) umgreifende C-förmige Aussparung (20) aufweist, deren Öffnung korrespondierend zur Freimachung (22) in Richtung des Fahrzeuginnenraums gerichtet ist und die Dicke der Distanzplatte (14) in Abhängigkeit von der Tiefe einer den Schließbolzen (8) aufnehmenden Mulde (23) der Schlossfalle (7) und der Länge des Schließbolzens (8) bemessen ist, wobei eine in Richtung der Säule (9) weisende Beaufschlagungsfläche (25) der Distanzplatte (14) zur Säule (9) beabstandet ist.

2. Tür nach Anspruch 1, **dadurch gekennzeichnet, dass** die Distanzplatte (14) eine Schließbolzenführung (21) der Schlossfalle (7) unter Freilassung einer einem Fahrzeuginnenraum zugewandten zum Ver- und Entriegeln der Tür erforderlichen Freimachung (22) für den Schließbolzen (8) umgreift.

3. Tür nach Anspruch 1 oder 2, **dadurch gekennzeichnet, dass** die Distanzplatte (14) das Stegblech (4) im Bereich des Schlosses überdeckt.

4. Tür nach einem der Ansprüche 1 bis 3, **dadurch gekennzeichnet, dass** eine an dem Stegblech (4) anliegende Anlagefläche (24) der Distanzplatte (14) parallel zu einer in der Tür angeordneten Grundplatte der Schlossfalle (7) ausgerichtet ist.

5. Tür nach Anspruch 1 oder 4, **dadurch gekennzeichnet, dass** die Anlagefläche (24) der Distanzplatte (14) parallel zu der Beaufschlagungsfläche (25) verläuft.

6. Tür nach einem der Ansprüche 1 bis 5, **dadurch gekennzeichnet, dass** die Distanzplatte (14) mit dem Stegblech (4) der Tür verklebt ist.

7. Tür nach einem der Ansprüche 1 bis 6, **dadurch gekennzeichnet, dass** die Distanzplatte (14) mittels Schlossbefestigungsschrauben (15) mit dem Schloss verschraubt ist, wobei die Köpfe (16) der Schlossbefestigungsschrauben (15) in der Distanzplatte (14) versenkt sind.

8. Tür nach einem der Ansprüche 1 bis 7, **dadurch gekennzeichnet, dass** die Distanzplatte (14) aus einem schlagzähen und gleitfähigen Kunststoff gefertigt ist.

9. Tür nach Anspruch 8, **dadurch gekennzeichnet, dass** die Distanzplatte (14) im Bereich der Verschraubungen mit Metalleinlagen versehen ist.

10. Tür nach einem der Ansprüche 1 bis 9, **dadurch gekennzeichnet, dass** auf der Beaufschlagungsfläche (25) der Distanzplatte (14) eine reflektierende Folie angeordnet ist.

11. Tür nach einem der Ansprüche 1 bis 10, **dadurch gekennzeichnet, dass** die Anlagefläche (24) der Distanzplatte (14) eine umlaufende an dem Stegblech (4) anliegende Lippe aufweist.

12. Tür nach einem der Ansprüche 1 bis 10, **dadurch gekennzeichnet, dass** dem Schließbolzen (8) ein an der Säule (9) befestigter C-förmiger Schließbügel (10) zugeordnet ist, dessen Öffnung (11) in Richtung des Fahrzeuginnenraums weist und dessen Schenkel (12) an ihrem freien Ende jeweils ein Ende des Schließbolzens (8) haltern.

## Claims

1. A door for a motor vehicle with a lock whose latch (7) cooperates with a locking bolt (8) which is fastened to a pillar (9) which is associated with a floor pan of the motor vehicle and faces a web plate (4) of the door which connects a door inner plate (2) and a door outer plate (3), **characterized in that** a spacer plate (14) between the pillar (9) and the web plate (4) of the door facing the pillar (9) is arranged either on the web plate (4) or the pillar in such a way that in the deformed state of the motor vehicle it prevents jamming of the locking bolt (8) with the door, for which purpose the substantially C-shaped spacer plate (14) comprises a C-shaped recess (20) which embraces the locking bolt guide (21) of the latch (7) and whose opening is directed in a corresponding manner to the clearance (22) in the direction of the interior space of the vehicle, and the thickness of the spacer plate (14) is dimensioned depending on the depth of a depression (23) of the latch (7) receiving the locking bolt (8) and the length of the locking bolt (8), with an impact surface (25) of the spacer plate (14) facing in the direction of the pillar (9) being spaced from the pillar (9).

2. A door according to claim 1, **characterized in that** the spacer plate (14) embraces a locking bolt guide (21) of the latch (7) by leaving open a clearance (22) for the locking bolt (8) which faces the interior of the vehicle and is required for locking and unlocking the door.

3. A door according to claim 1 or 2, **characterized in that** the spacer plate (14) covers the web plate (4) in the region of the lock.

4. A door according to one of the claims 1 to 3, **characterized in that** a contact surface (24) of the spacer plate (14) resting on the web plate (4) is aligned parallel to a base plate of the latch (7) arranged in the door.

5. A door according to claim 1 or 4, **characterized in that** the contact surface (24) of the spacer plate (14) extends parallel to the impact surface (25).

6. A door according to one of the claims 1 to 5, **characterized in that** the spacer plate (14) is glued together with the web plate (4) of the door.

7. A door according to one of the claims 1 to 6, **characterized in that** the spacer plate (14) is screwed together with the lock by means of lock fastening screws (15), with the heads (16) of the lock fastening screws (15) being sunk in the spacer plate (14).

8. A door according to one of the claims 1 to 7, **characterized in that** the spacer plate (14) is made of an impact-resistant and slidable plastic.

9. A door according to claim 8, **characterized in that** the spacer plate (14) is provided with metal inserts in the region of the screw joints.

10. A door according to one of the claims 1 to 9, **characterized in that** a reflective foil is arranged on the impact surface (25) of the spacer plate (14).

11. A door according to one of the claims 1 to 10, **characterized in that** the contact surface (24) of the spacer plate (14) comprises a circumferential lip resting on the web plate (4).

12. A door according to one of the claims 1 to 10, **characterized in that** a C-shaped locking bracket (10) which is fastened to the pillar (9) is associated with the locking bolt (8), the opening (11) of which bracket facing in the direction of the interior space of the vehicle and the legs (12) of which each fix one end of the locking bolt (8) at their free end.

## Revendications

1. Porte pour un véhicule à moteur avec une serrure dont le pêne (7) coopère avec un boulon de fermeture (8) fixé sur un montant (9) associé à un sous-ensemble de plancher du véhicule, qui est orienté vers une tôle de gousset (4) de la porte reliant une tôle intérieure de porte (2) et une tôle extérieure de porte (3), **caractérisé en ce qu'**une plaque d'écartement (14) est disposée entre le montant (9) et la tôle de gousset (4) de la porte orientée vers le montant (9), soit sur la tôle de gousset (4), soit sur le montant (9), de telle manière que lorsque le véhicule est déformé, elle empêche le boulon de fermeture (8) de se coincer avec la porte, ce pour quoi la plaque d'écartement (14) sensiblement en forme de C présente un évidement (20) en forme de C entourant le guide de boulon de fermeture (21) du pêne (7), dont l'ouverture correspond au dégagement (22) en direction de l'intérieur du véhicule et l'épaisseur de la plaque d'écartement (14) est dimensionnée en fonction de la profondeur d'une cuvette (23) du pêne (7) recevant le boulon de fermeture (8) et de la longueur du boulon de fermeture (8), une surface d'action (25) de la plaque d'écartement (14) orientée vers le montant (9) étant écartée du montant (9).

2. Porte selon la revendication 1, **caractérisée en ce que** la plaque d'écartement (14) entoure un guide de boulon de fermeture (21) du pêne (7) en libérant un dégagement (22) pour le boulon de fermeture (8) orienté vers l'intérieur du véhicule et nécessaire pour le verrouillage et le déverrouillage de la porte.

3. Porte selon la revendication 1 ou 2, **caractérisée en ce que** la plaque d'écartement (14) recouvre la tôle de gousset (4) au niveau de la serrure.

4. Porte selon l'une des revendications 1 à 3, **caractérisée en ce qu'**une surface d'appui (24) de la plaque d'écartement (14) contiguë à la tôle de gousset (4) est orientée parallèlement à une platine du pêne (7) disposée dans la porte.

5. Porte selon la revendication 1 ou 4, **caractérisée en ce que** la surface d'appui (24) de la plaque d'écartement (14) est parallèle à la surface d'action (25).

6. Porte selon l'une des revendications 1 à 5, **caractérisé en ce que** la plaque d'écartement (14) est collée à la tôle de gousset (4) de la porte.

7. Porte selon l'une des revendications 1 à 6, **caractérisée en ce que** la plaque d'écartement (14) est vissée à la serrure au moyen de vis de fixation de serrure (15), les têtes (16) des vis de fixation de serrure (15) étant enfoncée dans la plaque d'écartement (14).

8. Porte selon l'une des revendications 1 à 7, **caractérisée en ce que** la plaque d'écartement (14) est faite d'une matière plastique résistante aux chocs et capable de glissement.

9. Porte selon la revendication 8, **caractérisé en ce que** la plaque d'écartement (14) est munie d'inserts métalliques au niveau des vissages.

10. Porte selon l'une des revendications 1 à 9, **caractérisée en ce qu'**un film réfléchissant est disposé sur la surface d'action (25) de la plaque d'écartement (14).

11. Porte selon l'une des revendications 1 à 10, **caractérisé en ce que** la surface d'appui (24) de la plaque d'écartement (14) présente une lèvre continue reposant sur la tôle de gousset (4).

12. Porte selon l'une des revendications 1 à 10, **caractérisée en ce que** le boulon de fermeture (8) est associé à un étrier de fermeture (10) en forme de C fixé sur le montant (9), dont l'ouverture (11) est dirigée vers l'intérieur du véhicule et dont les bras (12) retiennent chacun une extrémité du boulon de fermeture (8) à son extrémité.
